# EUROPEAN PATENT SPECIFICATION

(11) **EP 3 179 079 B1**
(45) Date of publication and mention of the grant of the patent: **10.06.2020**
(21) Application number: 16184345.3
(22) Date of filing: 16.08.2016
(51) Int. Cl.: F02D 17/02, F02D 23/00, F02D 41/00, F02B 37/04, F02B 39/10, F01N 13/10

(54) **ENGINE SYSTEM**
MOTORSYSTEM
SYSTÈME MOTORISÉ

(30) Priority: 08.12.2015 KR 20150174277
(43) Date of publication of application: 14.06.2017
(73) Proprietor: Hyundai Motor Company, Seoul 137-938 (KR)
(72) Inventor: HAN, Dong Hee, Seoul (KR); LEE, Joowon, Gwangju-si, Gyeonggi-do (KR); LEE, Hyungbok, Seongnam-si, Gyeonggi-do (KR); CHU, Dong Ho, Ansan-si, Gyeonggi-do (KR); PARK, Jong Il, Seoul (KR)
(74) Representative: Viering, Jentschura & Partner mbB Patent- und Rechtsanwälte

(56) References cited:
- DE-U1-202015 102 239
- JP-A- 2005 291 020
- JP-A- 2013 057 289
- US-A- 6 158 218
- US-B2- 7 644 586

## Description

### TECHNICAL FIELD

The present disclosure relates to an engine system. More particularly, the present disclosure relates to an engine system that has a turbocharger and an electric supercharger, and deactivates some of cylinders using a cylinder deactivation apparatus (CDA) according to a driving range.

### BACKGROUND

An engine appropriately mixes air and fuel and generates driving power by burning the mixed gas.

In order to obtain required output power and combustion efficiency, sufficient air must be supplied to the engine. For this, a turbocharger is used to increase combustion efficiency and to supply sufficient air to the engine.

Generally, a turbine of the turbocharger is rotated by a pressure of exhaust gas exhausted from the engine, a compressor of the turbocharger compresses fresh air flowing in from the outside, and the compressed air is supplied to a combustion chamber of the engine. The turbocharger has been applied to diesel engines, and has recently been applied to gasoline engines.

The turbocharger may include a waste gate valve that adjusts an exhaust gas amount supplied to the turbine from the cylinder. However, the waste gate valve used for the turbocharger may be expensive.

As another example, an electric supercharger compresses external air using a compressor operated by a motor. Since the electric supercharger is operated by the motor, there is little turbo lag. The electric supercharger mainly supplies compressed air to the cylinder in a low speed and low load region.

As a further example, JP 2005 291020 A discloses a supercharging device for a multi-cylinder internal combustion engine of a cylinder deactivation type by which combustion in a part of cylinders can be stopped.

Moreover, DE 202015102239 U1 discloses an exhaust turbocharged engine with partial shutdown and arranged in parallel turbines.

Furthermore, US 7644586 B2 discloses a method of controlling an engine system, wherein the engine system comprises an internal combustion engine, a supercharging system having at least one supercharger to boost intake air to the internal combustion engine, a turbine, and a motor.

Generally, the turbocharger (hereinafter referred to as a 'mechanical turbocharger') operated by exhaust gas has low responsiveness, and there is a problem in realizing an engine having a high compression ratio because of high back pressure.

Further, since the output power of the motor may be limited according to an output of a battery provided in a vehicle, the usage of the electric supercharger may be limited to a low and middle speed region.

Therefore, a need exists for a new engine system having the mechanical turbocharger and the electric supercharger.

The above information disclosed in this Background section is only for enhancement of understanding of the background of the disclosure, and therefore it may contain information that does not form the prior art that is already known in this country to a person of ordinary skill in the art.

### SUMMARY

The present disclosure has been made in an effort to provide a new engine system that has a mechanical turbocharger operated by exhaust gas and an electric supercharger operated by a motor.

Further, the present disclosure has been made in an effort to provide an engine system in which some cylinders are deactivated using a CDA apparatus in a low speed region and exhaust gas discharged from the activated cylinders does not pass through the mechanical turbocharger, and thus back pressure can be reduced and a high compression ratio can be realized.

The present disclosure has also been made in an effort to provide an engine system that can reduce unnecessary pumping losses and improve fuel consumption by deactivating some of the cylinders in the low speed region.

The present invention provides an engine system according to claim 1. Further advantageous embodiments of the present invention are disclosed in the dependent claims.

According to an embodiment of the present disclosure, exhaust gas discharged from some of the cylinders operates a turbocharger and exhaust gas discharged from remaining cylinders is directly discharged to an exhaust gas purification apparatus, and thus back pressure can be reduced and high compression ratio can be realized.

Further, exhaust gas discharged from some of the cylinders may operate a turbocharger and exhaust gas discharged from remaining cylinders may be directly discharged to an exhaust gas purification apparatus, and thus it may be possible to eliminate a very expensive waste gate valve.

Further, since some of the cylinders are deactivated by a CDA apparatus and air compressed by an electric supercharger is supplied to the remaining cylinders, an engine system having high responsiveness in a low speed region may be realized.

### BRIEF DESCRIPTION OF THE DRAWINGS

The drawings are provided for reference in describing exemplary embodiments of the present disclosure, and the spirit of the present disclosure should not be construed only by the accompanying drawings.
FIG. 1 is a schematic view illustrating an engine system according to an exemplary embodiment of the present disclosure.
FIG. 2 is a graph illustrating an operating region of an engine system according to an exemplary embodiment of the present disclosure.

### DETAILED DESCRIPTION

The present disclosure will be described more fully hereinafter with reference to the accompanying drawings, in which exemplary embodiments of the disclosure are shown. As those skilled in the art would realize, the described embodiments may be modified in various different ways, all without departing from the scope of the present disclosure.

In describing the present disclosure, parts that are not related to the description will be omitted. Like reference numerals generally designate like elements throughout the specification.

In addition, the size and thickness of each configuration shown in the drawings may be arbitrarily shown for better understanding and ease of description, but the present disclosure is not limited thereto. In the drawings, the thickness of layers, films, panels, regions, etc., may be exaggerated for clarity.

Hereinafter, an engine system according to an exemplary embodiment of the present disclosure will be described in detail with reference to accompanying drawings.

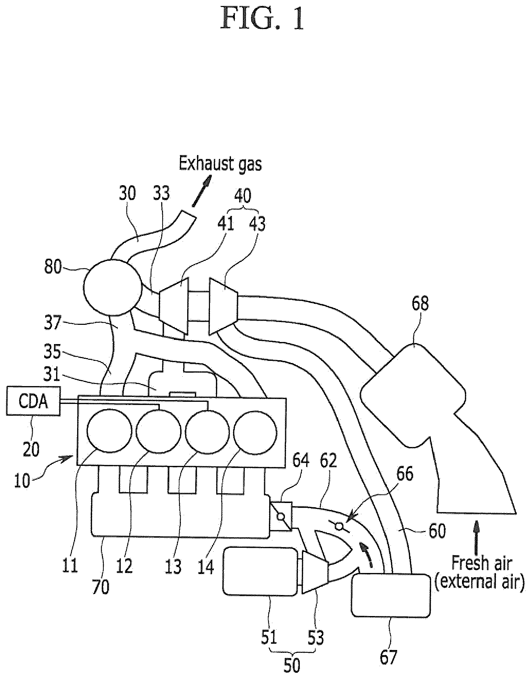

FIG. 1 is a schematic view illustrating an engine system according to an exemplary embodiment of the present disclosure.

As shown in FIG. 1, an engine system according to an exemplary embodiment of the present disclosure may include an engine 10 including a plurality of cylinders generating driving torque by combustion of fuel, a turbocharger 40 supplying compressed air to the cylinders, a CDA (cylinder deactivation) apparatus 20 for selectively deactivating some of the plurality of cylinders, an electric supercharger 50 supplying compressed air to the cylinders by being operated by a motor 51, and an exhaust manifold connected to the cylinders.

The engine 10 is a four-cylinder engine having four cylinders. The plurality of cylinders, that is, a first cylinder 11, a second cylinder 12, a third cylinder 13, and a fourth cylinder 14, may be sequentially, and/or linearly disposed. It is also to be understood that any arrangement of cylinders, may be used in the engine 10.

The CDA (cylinder deactivation apparatus) 20 is disposed at some of the cylinders, and may selectively deactivate some of the cylinders. When the CDA apparatus 20 is operated, fuel may not be supplied to a deactivated cylinder, and an operation of an intake valve and an exhaust valve may be stopped. The CDA apparatus 20 is widely known in the art, so a more detailed description thereof will not be presented in the present specification.

The CDA apparatus 20 is disposed at the second cylinder 12 and the third cylinder 13 among the four cylinders.

The exhaust manifold includes a first exhaust manifold 31 connected to cylinders at which the CDA apparatus 20 is mounted, and a second exhaust manifold 35 connected to cylinders at which the CDA apparatus 20 is not mounted.

The first exhaust manifold 31 is connected to a first exhaust line 33, and the second exhaust manifold 35 is connected to a second exhaust line 37. The first exhaust line 33 and the second exhaust line 37 are joined at a main exhaust line 30. An exhaust gas purification apparatus 80 for purifying exhaust gas is disposed at the main exhaust line 30 where the first exhaust line 33 and the second exhaust line 37 are joined.

The turbocharger 40 supplies compressed air to the cylinders, and includes a turbine 41 rotated by exhaust gas discharged from the cylinders and a compressor 43 rotated by a rotation force of the turbine and compressing intake air. The turbine 41 is disposed at the first exhaust line 33 and is operated by exhaust gas exhausted through the first exhaust manifold 31.

The electric supercharger 50 for supplying compressed air to the cylinder includes the motor 51 and an electric compressor 53. The electric compressor 53 is operated by the motor 51 and compress intake air, and the compressed intake air may be supplied to the cylinders.

The compressor 43 of the turbocharger 40 and the electric supercharger 50 may be disposed at an intake line 60 into which external air flows. An air cleaner 68 for filtering external air may be disposed at an inlet of the intake line 60. An intercooler 67 for cooling external air may be disposed at the intake line 60.

The compressor 43 of the turbocharger 40 may be disposed at an upstream side of the intake line 60, and the electric supercharger 50 may be disposed at a downstream side of the intake line 60. The external air flowing through the intake line 60 may be supplied to the cylinder through an intake manifold 70. A throttle valve 64 may be mounted at the intake manifold 70, and an air amount supplied to the cylinder may be adjusted by an opening of the throttle valve 64.

A bypass line 62 may be disposed at the intake line 60, and the bypass line 62 may bypass a part of external air supplied to the electric supercharger 50. A bypass valve 66 may be disposed at the bypass line 62. An amount of air supplied by the electric supercharger 50 may be adjusted by opening of the bypass valve 66.

Hereinafter, an operation of an engine system according to an exemplary embodiment of the present disclosure will be described in detail with reference to accompanying drawings.

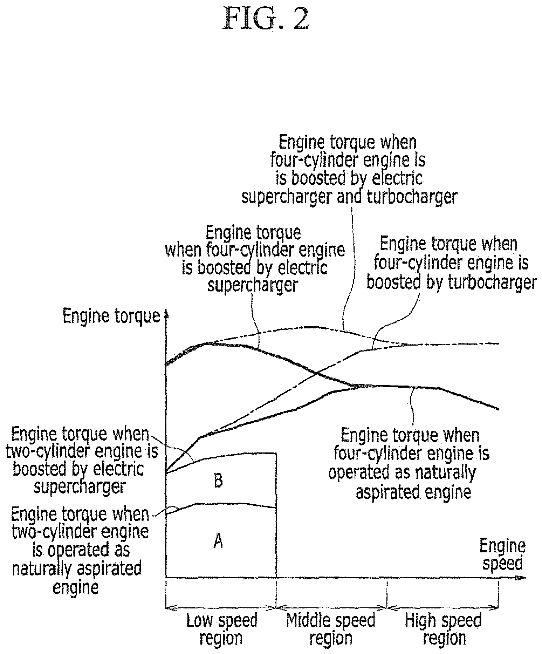

FIG. 2 is a graph illustrating operating regions of an engine system according to an exemplary embodiment of the present disclosure. In FIG. 2, a horizontal axis denotes an engine rotation speed and a vertical axis denotes an engine torque.

In FIG. 2, a solid line denotes an engine torque when the four-cylinder engine is operated as a naturally aspirated engine, a dotted line denotes an engine torque when the four-cylinder engine is boosted by the electric supercharger 50, a one-point chain line denotes an engine torque when the four-cylinder engine is boosted by the turbocharger 40, and a two-point chain line denotes an engine torque when the four-cylinder engine is boosted by the electric supercharger 50 and the turbocharger 40.

Referring to FIG. 2, the CDA apparatus 20 may deactivate the second cylinder 12 and the third cylinder 13 in a low speed region in which the engine speed is relatively low. Since the second cylinder 12 and the third cylinder 13 may be deactivated by the CDA, exhaust gas may not be exhaust from the first exhaust manifold 31 connected to the second cylinder 12 and the third cylinder 13, and thus the turbocharger 40 may not be operated.

Therefore, the engine 10 may be operated as a two-cylinder engine, and compressed air may be supplied to the first cylinder 11 and the fourth cylinder 14 by the electric supercharger 50.

Further, since exhaust gas discharged from the first cylinder 11 and the fourth cylinder 14 may not pass through the turbocharger 40 and may be discharged to the main exhaust line 30 through the second exhaust manifold 35 and the second exhaust line 37, the back pressure of the engine may be reduced. Therefore, the compression ratio of the first cylinder 11 and the fourth cylinder 14 may be increased, and fuel consumption may be improved.

Since compressed air may be supplied to the first cylinder 11 and the fourth cylinder 14 by the electric supercharger 50, a driving region (refer to 'B' of FIG. 2) in a state in which the two-cylinder engine is operated as a supercharged engine boosted by the electric supercharger 50 may be expanded compared to a driving region (refer to 'A' of FIG. 2) in a state in which the two-cylinder engine is operated as a naturally aspirated engine.

That is, the 'A' region of FIG. 2 may denote that the engine is operated as a two-cylinder naturally aspirated engine, and the engine torque may be adjusted by opening of a throttle valve. The 'B' region of FIG. 2 may denote that the engine is operated as a two-cylinder supercharged engine boosted by the electric supercharger, and the engine torque may be adjusted by the electric supercharger. That is, the engine torque may adjusted through an air supercharged by the electric supercharger and an opening of the throttle valve. At this time, the bypass valve may be closed in order to prevent the supercharged air from flowing backward.

However, since the CDA apparatus 20 may not be operated at a low speed and high load, the engine may be operated as a four-cylinder engine. At this time, compressed air may be supplied to the cylinder by the electric supercharger 50, and thus the driving region may be expanded at the low speed region. Despite the engine being operated as a four-cylinder engine, an exhaust gas amount discharged from the first cylinder 11 and the fourth cylinder 14 may be low, and thus boosting by the turbocharger 40 may be limited.

The CDA apparatus may not be operated during a middle speed region in which the engine speed is relatively fast compared to the low speed region, so the engine 10 may be operated as a four-cylinder engine.

The turbocharger 40 may be operated by exhaust gas discharged from the first cylinder 11 and the fourth cylinder 14, so compressed air may be supplied to the cylinders by the turbocharger 40. Further, compressed air may be also supplied to the cylinders by the electric supercharger 50.

That is, since engine boosting may be performed by the turbocharger 40 and the electric supercharger 50 at the middle speed region, the engine torque may be adjusted through the air supercharged by the turbocharger 40 and the electric supercharger 50 and the opening of the throttle valve 40.

The CDA apparatus may not be operated in a high speed region in which the engine speed is relatively fast compared to the middle speed region, so the engine 10 may be operated as a four-cylinder engine.

The turbocharger 40 may be operated by exhaust gas discharged from the first cylinder 11 and the fourth cylinder 14, so compressed air may be supplied to the cylinders by the turbocharger 40.

That is, since engine boosting may be performed by the turbocharger 40 in the high speed region, the engine torque may be adjusted through the air supercharged by the turbocharger 40 and the opening of the throttle valve 64.

According to a conventional turbocharger, since a supply amount of exhaust gas may be increased in the high speed region and rotation speed of a turbine wheel of the turbine 41 may deviate from a predetermined tolerance limit, there is a problem that the turbine wheel may become overloaded. To solve the above problem, exhaust gas discharged from the cylinder may be bypassed using a waste gate valve. At this time, about half of the exhaust gas discharged from the four cylinders may be detoured from the turbine 41.

However, according to an exemplary embodiment of the present disclosure, since the two cylinders (second cylinder 12 and third cylinder 13) are connected to the turbine 41 of the turbocharger 40, there is no need to bypass exhaust gas suppled to the turbine 41 of the turbocharger 40 in the high speed region. Therefore, it is possible to eliminate the waste gate valve disposed in the conventional turbocharger, and the manufacturing costs of the vehicle can be reduced.

As described above, the engine system according to an exemplary embodiment of the present disclosure may be selectively operated as a two-cylinder engine or a four-cylinder engine by the CDA apparatus 20, Therefore, since the engine system is operated as a two-cylinder engine in the low speed region, unnecessary pumping losses are reduced and fuel consumption of the vehicle may be improved.

Further, since some of the cylinders (second cylinder 12 and third cylinder 13) may be deactivated in the low speed region and exhaust gas discharged from the active cylinders (first cylinder 11 and fourth cylinder 14) may not pass through the turbocharger 40, back pressure of the engine may be reduced and a high compression ratio may be realized.

While this disclosure has been described in connection with what is presently considered to be practical exemplary embodiments, it is to be understood that the disclosure is not limited to the disclosed embodiments, but, on the contrary, is intended to cover various modifications as defined by the appended claims.

## Claims

1. An engine system comprising:
an engine (10) including a plurality of cylinders (11, 12, 13, 14) generating driving torque by combustion of fuel;
a cylinder deactivation apparatus "CDA" (20) disposed at one or more of the plurality of cylinders (11, 12, 13, 14) for selectively deactivating the one or more of the plurality of cylinders (11, 12, 13, 14);
a first exhaust manifold (31) connected to cylinders (12, 13) at which the CDA apparatus (20) is disposed;
a second exhaust manifold (35) connected to cylinders (11, 14) at which the CDA apparatus (20) is not disposed;
a turbocharger (40) including a turbine (41) rotated by exhaust gas exhausted from the first exhaust manifold (31), and further including a compressor (43) rotated together with the turbine (41) for compressing air supplied to the cylinders (11, 12, 13, 14); and
an electric supercharger (50) including a motor (51) and an electric compressor (53) operated by the motor (51) for supplying compressed air to the cylinders (11, 12, 13, 14),
wherein the turbine (41) is connected to a first exhaust line (33) connected to the first exhaust manifold (31), and exhaust gas discharged through a second exhaust line (37) connected to the second exhaust manifold (35) is directly discharged to an exhaust gas purification apparatus (80);
wherein the cylinders (11, 12, 13, 14) are in a four-cylinder engine (10) in which a first cylinder (11), a second cylinder (12), a third cylinder (13), and a fourth cylinder (14) are sequentially disposed, and
the CDA apparatus (20) is disposed at the second cylinder (12) and the third cylinder (13),
wherein a first exhaust line (33) connected to the first exhaust manifold (31) and a second exhaust line (37) connected to the second exhaust manifold (35) are joined at a main exhaust line (30), and
an exhaust gas purification apparatus (80) is disposed at the main exhaust line (30).

2. The engine system of claim 1, wherein the compressor (43) of the turbocharger (40) and the electric supercharger (50) are disposed at an intake line (60) into which fresh air flows, and an intercooler (67) for cooling the fresh air is disposed at the intake line (60).

3. The engine system of claim 1 or 2, wherein a bypass line (62) for bypassing a part of the air supplied to the electric supercharger (50) is disposed at the intake line (60), and
a bypass valve (66) is disposed at the bypass line (62).

4. The engine system of claim 1-3, wherein the CDA apparatus (20) deactivates some of the cylinders (11, 12, 13, 14) by being operated at a low speed region.

5. The engine system of claim 4, wherein an engine (10) torque is adjusted through an air supercharged by the electric supercharger (50) and an opening of a throttle valve (64) when the CDA apparatus (20) is operated in the low speed region.

6. The engine system of claim 2, wherein the electric supercharger (50) is disposed in the intake line (60) at a downstream side of the compressor (43).

## Patentansprüche

1. Verbrennungsmotorsystem, aufweisend:
einen Verbrennungsmotor (10), der eine Mehrzahl von Zylindern (11, 12, 13, 14) aufweist, die durch Verbrennung von Kraftstoff Antriebsmoment erzeugen,
eine Zylinder-Deaktivierungsvorrichtung "CDA" (20), die an einem oder mehreren der Mehrzahl von Zylindern (11, 12, 13, 14) angeordnet ist, zum wahlweisen Deaktivieren des einen oder mehreren der Mehrzahl von Zylindern (11, 12, 13, 14),
einen ersten Abgaskrümmer (31), der mit Zylindern (12, 13) verbunden ist, an denen die CDA-Vorrichtung (20) angeordnet ist,
einen zweiten Abgaskrümmer (35), der mit Zylindern (11, 14) verbunden ist, an denen die CDA-Vorrichtung (20) nicht angeordnet ist,
einen Turbolader (40), aufweisend eine Turbine (41), die durch Abgas gedreht wird, das aus dem ersten Abgaskrümmer (31) ausgegeben wird, und ferner aufweisend einen Kompressor (43), der zusammen mit der Turbine (41) gedreht wird, zum Komprimieren von den Zylindern (11, 12, 13, 14) zugeführter Luft, und
einen elektrischen Lader (50), aufweisend einen Elektromotor (51) und einen durch den Elektromotor (51) betriebenen elektrischen Kompressor (53) zum Zuführen von Druckluft zu den Zylindern (11, 12, 13, 14),
wobei die Turbine (41) mit einer ersten Abgasleitung (33) verbunden ist, die mit dem ersten Abgaskrümmer (31) verbunden ist, und Abgas, das durch eine zweite Abgasleitung (37) abgeleitet wird, die mit dem zweiten Abgaskrümmer (35) verbunden ist, direkt zu einer Abgasreinigungsvorrichtung (80) abgeleitet wird,
wobei die Zylinder (11, 12, 13, 14) in einem Vierzylinder-Verbrennungsmotor (10) sind, in dem ein erster Zylinder (11), ein zweiter Zylinder (12), ein dritter Zylinder (13) und ein vierter Zylinder (14) nacheinander angeordnet sind, und
die CDA-Vorrichtung (20) an dem zweiten Zylinder (12) und dem dritten Zylinder (13) angeordnet ist,
wobei eine erste Abgasleitung (33), die mit dem ersten Abgaskrümmer (31) verbunden ist, und eine zweite Abgasleitung (37), die mit dem zweiten Abgaskrümmer (35) verbunden ist, an einer Hauptabgasleitung (30) zusammengefügt sind, und
eine Abgasreinigungsvorrichtung (80) an der Hauptabgasleitung (30) angeordnet ist.

2. Verbrennungsmotorsystem gemäß Anspruch 1, wobei der Kompressor (43) des Turboladers (40) und der elektrische Lader (50) an einer Ansaugleitung (60) angeordnet sind, in die Frischluft strömt, und
an der Ansaugleitung (60) ein Ladeluftkühler (67) zum Kühlen der Frischluft angeordnet ist.

3. Verbrennungsmotorsystem gemäß Anspruch 1 oder 2, wobei eine Bypassleitung (62) zum Umleiten eines Teils der dem elektrischen Lader (50) zugeführten Luft an der Ansaugleitung (60) angeordnet ist und
ein Bypassventil (66) an der Bypassleitung (62) angeordnet ist.

4. Verbrennungsmotorsystem gemäß Anspruch 1 bis 3, wobei die CDA-Vorrichtung (20) einige der Zylinder (11, 12, 13, 14) durch Betriebenwerden in einem geringe-Geschwindigkeit-Bereich deaktiviert.

5. Verbrennungsmotorsystem gemäß Anspruch 4, wobei ein Verbrennungsmotor- (10) Drehmoment durch eine durch den elektrischen Lader (50) aufgeladene Luft und ein Öffnen eines Drosselventils (64) angepasst wird, wenn die CDA-Vorrichtung (20) im geringe-Geschwindigkeit-Bereich betrieben wird.

6. Verbrennungsmotorsystem gemäß Anspruch 2, wobei der elektrische Lader (50) in der Ansaugleitung (60) auf einer Stromabwärtsseite des Kompressors (43) angeordnet ist.

## Revendications

1. Système de moteur comprenant :
un moteur (10) qui comprend une pluralité de cylindres (11, 12, 13, 14) qui génèrent un couple moteur grâce à la combustion d'un carburant ;
un appareil de désactivation de cylindre « CDA » (20) disposé au niveau d'un ou de plusieurs de la pluralité de cylindres (11, 12, 13, 14), destiné à désactiver sélectivement l'un ou plusieurs de la pluralité de cylindres (11, 12, 13, 14) ;
un premier collecteur d'échappement (31) connecté aux cylindres (12, 13) où est disposé l'appareil CDA (20) ;
un second collecteur d'échappement (35) connecté aux cylindres (11, 14) où n'est pas disposé l'appareil CDA (20) ;
un turbocompresseur (40) comprenant une turbine (41) mise en rotation par les gaz d'échappement qui s'échappent du premier collecteur d'échappement (31), et comprenant en outre un compresseur (43) mis en rotation avec la turbine (41) afin de comprimer l'air fourni aux cylindres (11, 12, 13, 14) ; et
un compresseur électrique (50) comprenant un moteur (51) et un compresseur électrique (53) actionné par le moteur (51) destiné à fournir l'air comprimé aux cylindres (11, 12, 13, 14),
où la turbine (41) est connectée à une première canalisation d'échappement (33) connectée au premier collecteur d'échappement (31), et les gaz d'échappement évacués à travers une seconde canalisation d'échappement (37) connectée au second collecteur d'échappement (35), sont évacués directement vers un appareil d'épuration des gaz d'échappement (80) ;
où les cylindres (11, 12, 13, 14) se situent dans un moteur à quatre cylindres (10) dans lequel sont disposés séquentiellement un premier cylindre (11), un deuxième cylindre (12), un troisième cylindre (13), et un quatrième cylindre (14), et
l'appareil CDA (20) est disposé au niveau du deuxième cylindre (12) et du troisième cylindre (13),
où une première canalisation d'échappement (33) connectée au premier collecteur d'échappement (31), et une seconde canalisation d'échappement (37) connectée au second collecteur d'échappement (35), se rejoignent au niveau d'une canalisation principale d'échappement (30), et
un appareil d'épuration des gaz d'échappement (80) est disposé au niveau de la canalisation principale d'échappement (30).

2. Système de moteur selon la revendication 1, où
le compresseur (43) du turbocompresseur (40) et le compresseur électrique (50) sont disposés au niveau d'une canalisation d'entrée (60) dans laquelle circule l'air frais, et
un échangeur thermique intermédiaire (67) destiné à refroidir l'air frais, est disposé au niveau de la canalisation d'entrée (60).

3. Système de moteur selon la revendication 1 ou 2, où
une canalisation de dérivation (62) destinée à dériver une partie de l'air fourni au compresseur électrique (50), est disposée au niveau de la canalisation d'entrée (60), et
une soupape de dérivation (66) est disposée au niveau de la canalisation de dérivation (62).

4. Système de moteur selon l'une quelconque des revendications 1 à 3, où l'appareil CDA (20) désactive certains des cylindres (11, 12, 13, 14) en étant actionné au niveau d'une région à vitesse réduite.

5. Système de moteur selon la revendication 4, où le couple du moteur (10) est réglé grâce à l'air suralimenté par le compresseur électrique (50), et à l'ouverture du papillon des gaz (64) lorsque l'appareil CDA (20) est actionné dans la région à vitesse réduite.

6. Système de moteur selon la revendication 2, où le compresseur électrique (50) est disposé dans la canalisation d'entrée (60) du côté aval du compresseur (43).
